# EUROPEAN PATENT APPLICATION

(11) **EP 1 029 653 A2**
(43) Date of publication of application: **23.08.2000**
(21) Application number: 00102247.4
(22) Date of filing: 14.02.2000
(51) Int. Cl.: B29C 71/00

(54) **Gasket and process for producing the same**

(30) Priority: 19.02.1999 JP 4098899; 25.02.1999 JP 4840099; 18.11.1999 JP 32820599
(71) Applicant: Bridgestone Corporation, Tokyo (JP)
(72) Inventor: Nishimuro, Youichi, Kunitachi-shi, Tokyo (JP); Toyosawa, Shinichi, Tokorozawa-shi, Saitama-ken (JP); Machida, Kunio, Tokyo (JP)
(74) Representative: Gille Hrabal Struck Neidlein Prop Roos

(57) **Abstract**

There are disclosed a gasket which is fitted to a cover body or a frame body, and which is integrated with the cover body or the frame body, characterized by shaping the gasket into a prescribed shape, and thereafter carrying out a treatment of removing gases contained in the gasket by a heat treatment, a vacuum drying treatment or simultaneous heat treatment and vacuum drying treatment, wherein the integration of the gasket with the cover body or the frame body is carried out by injection molding method, two-color molding method or inserting molding method; a process for producing the above gasket by any of the above molding methods; a gasket material which constitutes the gasket, and is subjected to a treatment of removing gases contained in the gasket material prior to the shaping of the gasket material into a prescribed shape; a process for producing the above gasket material by any of the above molding methods; a gasket which comprises the above gasket material and is integrated with a cover body or a frame body; and a process for producing the gasket just mentioned by any of the above molding methods. All the above gaskets are free from the generation of a gas which contaminates a magnetic disc and the like used in electronic equipment.

## Description

### BACKGROUND OF THE INVENTION

### 1 . Field of the Invention

The present invention relates to a gasket which hermetically seals the joint surface between a cover body and a main body in lightweight equipment, for instance, hard disc equipment of a computer; and a process for the production of said gasket. The gasket according to the present invention prevents gases from generating at the time of using electronic equipment, and is applicable to techniques for hermetically sealing the hard disc equipment, etc. of a computer installed inside a robot in an automatic manufacturing line or the like so as to completely keep water and air away from the equipment, etc.

### 2. Description of the Related Arts.

The development of electronic equipment in recent years really amazes the persons concerned. The aforesaid equipment, which is subjected to printed circuit on a substrate by the use of integrated circuits utilizing semiconductors, is directed to compactified lightweight equipment, and is prone to be readily damaged by moisture or dampness in particular. Accordingly, the hermetically sealing performance of a gasket is a factor of importance for the performance and durability of the electronic equipment, which gasket is used for hermetically sealing the joint surface between a cover body and a box type main body having built-in integrated circuits mentioned above.

It is customary for the purpose of hermetical sealing to integrate a cover body and a box type main body having builtin integrated circuits into equipment by interposing a gasket which hermetically seals the joint surface between said both the bodies and tightening them with fixing bolts. There has heretofore been used a high density urethane foam material as a gasket material. The urethane foam material is in the form of thin sheet foam, and is used in many cases by sticking an adhesive tape on the urethane sheet foam and punching the sheet foam into a prescribed shape. In addition, there is proposed a gasket wherein an elastomer is fixed to both sides of a frame body which is manufactured by inserting into a mold, a frame body composed of stainless steel or a synthetic resin, and injection molding the elastomer onto the frame body { refer to Japanese Patent Application Laid-Open No. 283698/1996 (Heisei-8)} .

However, most of both the above mentioned gasket composed of the urethane foam material and gasket composed of the elastomer generate gases that contaminate a magnetic disc, when practical use of the main body of electronic equipment raises the temperature therein to 40 to 50°C . The gases thus generated are often accumulated on the disc of a hard disc apparatus and the like, thereby making it impossible to read out on the hard disc apparatus.

As a countermeasure for eliminating the above mentioned disadvantage, there is provided a mechanism of adsorbing the gases thus generated { refer to Japanese Patent Application Laid-Open No. 302178/1994 (Heisei-6)} , and there is provided a gas adsorbent in breathing holes that are made in the main body of electronic equipment to cope with the infiltration from the outside, of gases that contaminate magnetic discs {refer to Japanese Patent Application Laid-Open No. 36548 / 1994 (Heisei-6)} .

Nevertheless even with the use of the above mentioned provisions, it has been impossible to avoid the disadvantage that the use of electronic equipment is always accompanied by the generation of gases, and further the problems still remain unsolved in that it has been difficult to rapidly remove the gases thus generated by using the aforesaid gas adsorbing mechanism, and that the long-term use of electronic equipment deteriorates the effect on gas removal.

### SUMMARY OF THE INVENTION

Under such circumstances, it is a general object of the present invention to provide a gasket which is free from the generation of a gas which contaminates a magnetic disc and the like at the time of using electronic equipment without installing a mechanism of gas removal on the main body of the electronic equipment in question.

Other objects of the present invention will be obvious from the text of the specification hereinafter disclosed.

In view of the foregoing, intensive extensive research and investigation were accumulated by the present inventors in order to achieve the above mentioned objects. As a result, it has been found that the general object can been achieved, since no gas is generated during the use of electronic equipment, by shaping a gasket into a prescribed shape, and thereafter carrying out a treatment of removing gas contained in said gasket. It has also been found that the general object can been achieved, since no gas is generated during the use of electronic equipment, by carrying out a treatment of removing gas contained in a gasket material prior to the shaping of said gasket material into a prescribed shape. It being so, the present invention has been accomplished by the above mentioned findings and information.

Specifically, the present invention provides a gasket which is fitted to a cover body or a frame body, and which is integrated with said cover body or a frame body, characterized by shaping said gasket into a prescribed shape, and thereafter carrying out a treatment of removing gases contained in said gasket.

The present invention further provides a gasket material constituting a gasket which is fitted to a cover body or a frame body, and which is integrated with said cover body or a frame body, characterized by carrying out a treatment of removing gases contained in said gasket material prior to the shaping of said gasket material into a prescribed shape.

### BRIEF DESCRIPTION OF THE DRAWINGS

FIG.1 is a perspective illustration which shows a gasket fitted to a frame according to the present invention, and which is viewed from the sealing surface side; and
FIG.2 is a perspective illustration which shows a gasket fitted to a cover according to the present invention, and which is viewed from the sealing surface side.

### DESCRIPTION OF THE PREFERRED EMBODIMENTS

With reference to the gasket according to the present invention, the material constituting the cover body and the frame body is not specifically limited, but can be selected for use from a variety of metallic sheets and thermoplastic resins. The metallic sheets are not specifically limited, but can be properly selected for use according to the purpose of use of a cover body or a frame body from cold rolled steel sheets, galvanized steel sheets, aluminum/zinc alloy plated steel sheets, stainless steel sheets, aluminum sheets, aluminum alloy sheets, magnesium sheets and magnesium alloy sheets, and the like. There are also usable injection molded magnesium sheets. From the viewpoint of corrosion resistance of the cover body and the frame body, there are preferably usable metallic sheets that are treated with non-electrolytic nickel plating. As a method for non-electrolytic nickel plating, there is usable any of well known methods that have heretofore been applied to metallic raw materials, for instance, a method which comprises immersing a metallic sheet to be treated in a non-electrolytic nickel plating bath comprising an aqueous solution at a pH of approximately 4.0 to 5.0 and at a temperature of approximately 85 to 95°C which contains nickel sulfate, sodium hypochlolite, lactic acid, propionic acid and the like each in a proper proportion.

The thickness of the metallic sheet to be employed in the the present invention is properly selected for use according to the purpose of use of a cover body or a frame body. It is in the range of usually from 0.3 to 1.0 mm, preferably from 0.4 to 0.6 mm in the case of a cover body, and in the case of a frame body it is in the range of usually from 0.1 to 0.5 mm, preferably from 0.15 to 0.3 mm.

The thermoplastic resin which constitutes a cover body or a frame body in the present invention may be properly selected for use from among acrylonitrile styrene (AS) resin, acrylonitrile butadiene styrene (ABS) resin, styrenic resin such as polystyrene and syndiotactic polystyrene, olefinic resin such as polyethylene and polypropylene, polyamide resin such as nylon, polyester based resin such as polyethylene terephthalate and polybutylene terephthalate, modified polyphenylene ether, acrylic resin, polyacetal, polycarbonate, a liquid crystal polymer, polyphenylene sulfide (PPS) and the like. The liquid crystal polymer is preferably a thermotropic liquid crystal polymer, which is specifically classified into those of polycarbonate base, polyurethane base, polyamide base, polyester base and the like, respectively. Any one of the above-exemplified thermoplastic resins may be used alone or in combination with at least one other resin mentioned above.

In regard to an elastic body which constitutes the gasket (gasket material) according to the present invention, there are usable vulcanized rubber such as butyl rubber and thermoplastic elastomers. As the thermoplastic elastomers, there are usable styrenic, olefinic, urethane based and ester based thermoplastic elastomers, of which is preferably usable in particular the copolymer which comprises at least one polymer block composed principally of a vinylic aromatic compound and at least one polymer block composed principally of a conjugated diene compound.

More specific examples of said elastomers include:
① Block copolymer of crystalline polyethylene and ethylene/ butylene styrene random copolymer, said block copolymer being obtained by hydrogenating block copolymer of polybutadiene and butadiene-styrene random copolymer; and
② Block copolymer of polybutadiene and polystyrene, block copolymer of polyisoprene and polystyrene, diblock copolymer of crystalline polyethylene and polystyrene, said diblock copolymer being obtained by hydrogenating block copolymer of polybutadiene or ethylene-butadiene random copolymer and polystyrene, triblock copolymer ( SEBS ) of styrene-ethylene/ butylene-styrene, and triblock copolymer ( SEPS ) of styrene-ethylene/ propylene-styrene, in particular, block copolymer of styrene-ethylene/ butylene-styrene, and block copolymer of styrene-ethylene/ propylene-styrene. Any one of the above-exemplified thermoplastic elastomers may be used alone or in combination with at least one other elastomer mentioned above.

The elastic body which constitutes the gasket (gasket material) is preferably a thermoplastic elastomer in view of dispensing with the time for vulcanization or the like in the production step.

It is possible in the present invention to add a reinforcing material to the foregoing thermoplastic resins or thermoplastic elastomers to the extent that the effects of the present invention are not impaired thereby. Said reinforcing material is exemplified by inorganic fibers such as glass fiber and carbon fiber, inorganic fillers such as mica and talc, and whiskers of potassium titanate and the like.

The integration of the cover body or the frame body and the gasket, is carried out by a method in which the gasket is injection molded to shape onto the cover body or the frame body. In the case where the material for the cover body or the frame body is a thermoplastic resin, and the material for the gasket is a thermoplastic elastomer, the integration is made by bonding between said thermoplastic resin and said thermoplastic elastomer, specifically by two-color molding method, inserting molding method or the like.

By means of the two-color molding method, there is formed the composite gasket in which the thermoplastic resin is integrated with the thermoplastic elastomer layer formed thereon through the steps of firstly subjecting the thermoplastic resin constituting the cover body or the frame body to melt injection molding into a mold with an injection molding machine for exclusive use, and after the thermoplastic resin molding thus formed is solidified, subjecting the thermoplastic elastomer which constitutes the gasket and is excellent in fusion adhesivity to melt injection molding with an injection molding machine for exclusive use so as to form the thermoplastic elastomer layer on part of the thermoplastic resin molding. Such two-color molding method is capable of producing composite gasket in high production efficiency at a low cost.

On the other hand, by means of the inserting molding method, there is obtained the composite gasket in which the thermoplastic resin constituting the cover body or the frame body is integrated with the thermoplastic elastomer layer formed on part of the resin through the steps of preparing in advance, the cover body or the frame body having a prescribed shape by any of various well known molding methods, placing the resultant cover body or the frame body in a mold, and then forming the thermoplastic elastomer layer on part of the cover body or the frame body by subjecting the thermoplastic elastomer to melt injection molding thereonto by means of an injection molding machine.

In the present invention, the gases contained in the gasket which has been fabricated in the foregoing manner, are removed by treating said gasket. The gas removal can be put into practice by any of a variety of methods, preferably by heat treatment, vacuum drying treatment or simultaneous heat treatment and vacuum drying treatment. The heat treatment can be carried out under the conditions including a temperature of 40 to 160°C for 0.5 to 120 hours, preferably 50 to 150°C for 1 to 96 hours. The vacuum drying treatment can be carried out under the conditions including a reduced pressure of 50 to 0.01 kPa for 0.5 to 120 hours, preferably 10 to 0.1 kPa for 1 96 hours. Alternatively, the heat treatment and the vacuum drying treatment may be simultaneously applied under the conditions same as the foregoing.

By the above mentioned gas removal treatment, it is made possible to remove the gases contained in the shaped gasket at a removal rate of at least 50% . The removal rate thereof is particularly preferably at least 70% . The concentration of the gases contained in the shaped gasket which has been subjected to such treatment, is preferably at most 1000ppm, particularly preferably at most 100ppm.

The above mentioned description is concerned with the case where the gasket material is shaped into a prescribed shape, and thereafter the treatment of removing gas contained in said gasket is carried out. In addition, the treatment conditions are applicable to the case where the treatment of removing gas contained in a gasket material is carried out prior to the shaping of said gasket material into a prescribed shape, and also to the case where the gasket material in the form of pellet is subjected to gas removal treatment.

The gasket according to the present invention which is manufactured in the foregoing manner, is free from the generation of any gas which contaminates a magnetic disc and the like at the time of using electronic equipment.

In what follows, the present invention will be described in further detail with reference to working examples, which however shall never limit the present invention thereto.

### Example 1

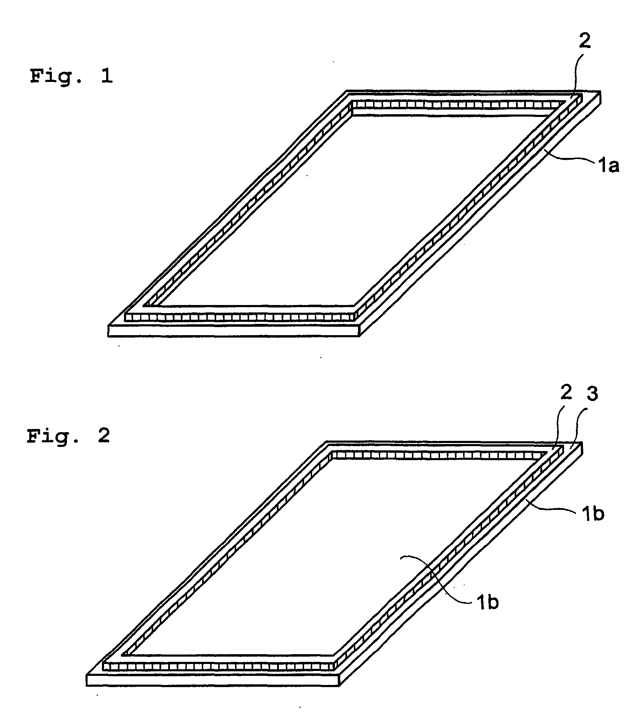

FIG.1 is a perspective illustration which shows the gasket fitted to a frame according to the present invention, and which is viewed from the sealing surface side, wherein 1a denotes frame body, and 2 indicates gasket. The gasket fitted to the frame measured 100mm × 70mm, and was fabricated in the following manner.

The frame body was made of stainless steel which had a thickness of 0.15mm, and was subjected to non-electrolytic nickel plating. The thermoplastic elastomer constituting the gasket 2 was prepared by kneading 100 parts by weight of SEPS having a number average molecular weight of 100,000 and a styrene moiety content of 30% by weight; 150 parts by weight of paraffin base oil having a kinematic viscosity at 40°C of 380mm²/sec ( manufactured by Idemitsu Koasan Co.,Ltd. under the trade name "Diana Process Oil PW 380" having a weight average molecular weight of 750 ) ; and 12.5 parts by weight of polypropylene ( manufactured by Mitsubishi Chemical Industries Ltd. under the trade name "Mitsubishi Polypropylene BC05B"). The resultant thermoplastic elastomer had a JIS hardness A of 22 degrees.

Thereafter, by the use of a molding machine (manufactured by Nissei Plastic Industrial Co.,Ltd. under the trade name " TH30R2VSE ") , the above prepared frame body was placed in a mold, and the above-prepared thermoplastic elastomer for the gasket was subjected to melt injection molding onto the frame body in the mold at a mold temperature of 50°C and a resin temperature of 230°C . After all, there was prepared a gasket fitted to the frame body wherein the gasket was integrated with the frame body.

Subsequently the resultant gasket fitted to the frame body was heat treated in an oven at 85°C for 20 hours, and 100mg of the gasket portion was cut off as a sample for testing, which was heat treated in a glass made vessel under the conditions as described hereunder to measure the amount of gases generated during the testing.
Heating conditions: 100°C , 30 minutes
Collection method: Gases were collected by the use of a thermal desorption cold trap manufactured by GL Science Co., Ltd. at a trap temperature of 130°C at a flow rate of purge gas of He being 10mℓ/minute.
Measuring method: The trap portion was rapidly heated to 130°C, and a measurement was made by GC-Ms. There were used a secondary electron multiplier equipped with a post acceleration detector and an atomic emission detector.

As the result of the measurement, the generated gases proved to be hydrocarbons from the mass chromatogram. By carrying out a measurement of a sample not treated with the heat treatment in the same manner as above, it was recognized that the amount of gas generation was lowered to approximately 25% of that for the untreated sample. Therefore, the removal rate of gases from the gasket was approximately 75% .

The gasket fitted to the frame body as prepared in the above mentioned manner, was used in a hard disc apparatus of a computer. As a result, over a long period of time there was no occurrence of failure or trouble considered to be due to gas generation.

### Example 2

FIG.2 is a perspective illustration which shows the gasket fitted to a cover according to the present invention, and which is viewed from the sealing surface side, in which the symbols 1b, 2 and 3 denote cover body, gasket and flange, respectively. The gasket fitted to the cover measured 100mm X 70mm, and was fabricated in the following manner.

The cover body was made of stainless steel which had a thickness of 0.4mm, and was subjected to non-electrolytic nickel plating. The thermoplastic elastomer constituting the gasket 2 was prepared by kneading 100 parts by weight of SEPS having a number average molecular weight of 100,000 and a styrene moiety content of 30% by weight; 150 parts by weight of paraffin base oil having a kinematic viscosity at 40°C of 30mm²/sec ( manufactured by Idemitsu Koasan Co.,Ltd. under the trade name "Diana Process Oil PW 32" having a weight average molecular weight of 400) ;12.5 parts by weight of polypropylene ( manufactured by Mitsubishi Chemical Industries Ltd. under the trade name "Mitsubishi Polypropylene BC05B") ; and one part by weight of a colorant. The resultant thermoplastic elastomer had a JIS hardness A of 22 degrees.

Subsequently, holes were made in the portion where the gasket 2 was bonded to the cover body 1b in 14 numbers in the side with a length of 100mm, and 10 numbers in the side with a length of 70mm. Further, there were installed anchors ( not shown on the figure) for the integration of the cover body 1b and the gasket 2. Thereafter, the cover body 1b thus prepared was inserted into a mold which had been fitted to a molding machine ( manufactured by Nissei Plastic Industrial Co.,Ltd. under the trade name " TH30R5VSE "), and the above-prepared thermoplastic elastomer for the gasket was injection molded onto the cover body in the mold at a mold temperature of 50°C and a resin temperature of 200°C . After all, there was prepared a gasket fitted to the cover body wherein the gasket was integratedly composited with the cover body.

Subsequently the resultant gasket fitted to the cover body was subjected to vacuum drying treatment in a vacuum dryer at 40°C for 15 hours, and 100mg of the gasket portion was cut off as a sample for testing. Thus, measurement was made of the amount of gases generated during the test in the same manner as in Example 1. As the result of the measurement, the generated gases proved to be hydrocarbons from the mass chromatogram. By carrying out a measurement of a sample not treated with the vacuum drying treatment in the same manner as above, it was recognized that the amount of gas generation was lowered to approximately 10% of that for the untreated sample. Therefore the removal rate of gases from the gasket was approximately 90% .

The gasket fitted to the cover body as prepared in the above mentioned manner, was used in a hard disc apparatus of a computer. As a result, over a long period of time there was no occurrence of failure or trouble considered to be due to gas generation.

### Example 3

The gasket fitted to the frame as shown in FIG.1 measured 100mm × 70mm, and was fabricated in the following manner.

The frame body was made of stainless steel which had a thickness of 0.15mm, and was subjected to non-electrolytic nickel plating. The thermoplastic elastomer constituting the gasket 2 was prepared by kneading 100 parts by weight of SEPS having a number average molecular weight of 100,000 and a styrene moiety content of 30% by weight; 80 parts by weight of paraffin base oil having a kinematic viscosity at 40°C of 380mm²/sec ( manufactured by Idemitsu Koasan Co.,Ltd. under the trade name "Diana Process Oil PW 380" having a weight average molecular weight of 750 ) ; and 16 parts by weight of polypropylene ( manufactured by Japan Polychem Industries Ltd. under the trade name " Novatic PP·BC05B") by the use of a twin screw extruder at 200°C . The resultant thermoplastic elastomer had a JIS hardness A of 46 degrees.

Subsequently, the strand obtained by the above mentioned kneading was cut into pellet. The resultant pellet was placed in a vessel made of stainless steel so as to fill in a thickness of about 3 cm, and was heat treated in an oven at 80°C for 8 hours. Thereafter, by the use of an injection molding machine ( manufactured by Nissei Plastic Industrial Co.,Ltd. under the trade name " PS60E5ASE "), said pellet was made into a sheet having a thickness of 1 mm. The resultant sheet was cut into small pieces each measuring 1mm × 40mm, which were heat treated in a glass made vessel under the conditions as described hereunder to measure the amount of gases generated during the testing.
Heating conditions: 110°C , 15 minutes
Collection method: Gases were collected by the use of a thermal desorption cold trap manufactured by GL Science Co., Ltd. at a trap temperature of 130°C at a flow rate of purge gas of He being 10mℓ /minute.
Measuring method: The trap portion was rapidly heated to 130°C , and a measurement was made by GC-Ms. There were used a secondary electron multiplier equipped with a post acceleration detector and an atomic emission detector.

As the result of the measurement, the generated gases proved to be hydrocarbons from the mass chromatogram. By carrying out a measurement of a sample not treated with the heat treatment in the same manner as above, it was recognized that the amount of gas generation was lowered to approximately one eighth (1/8) of that for the untreated sample.

Thereafter, by the use of a molding machine (manufactured by Nissei Plastic Industrial Co.,Ltd. under the trade name " TH30R2VSE ") , the above prepared frame body was placed in a mold, and the above prepared thermoplastic elastomer for the gasket was subjected to melt injection molding onto the frame body in the mold at a mold temperature of 50°C and a resin temperature of 230°C . After all, there was prepared a gasket fitted to the frame body wherein the gasket was integrated with the frame body.

The gasket fitted to the frame body as prepared in the above mentioned manner, was used in a hard disc apparatus of a computer. As a result, over a long period of time there was no occurrence of failure or trouble considered to be due to gas generation.

## Claims

1. A gasket which is fitted to a cover body or a frame body, and which is integrated with said cover body or said frame body, characterized by shaping said gasket into a prescribed shape, and thereafter carrying out a treatment of removing gases contained in said gasket.

2. The gasket according to Claim 1, wherein said treatment of removing gases is a heat treatment.

3. The gasket according to Claim 1, wherein said treatment of removing gases is a vacuum drying treatment.

4. The gasket according to Claim 1, wherein said treatment of removing gases is simultaneous heat treatment and vacuum drying treatment.

5. The gasket according to Claim 1, wherein the gas removal rate is at least 50% .

6. The gasket according to Claim 1, wherein the cover body or the frame body comprises a thermoplastic resin, the gasket comprises a thermoplastic elastomer, and the integration of said thermoplastic resin and said thermoplastic elastomer is made by fused adhesion therebetween.

7. The gasket according to Claim 1, wherein the gasket is shaped onto the cover body or the frame body through injection molding method.

8. A process for producing the gasket as set forth in Claim 6 which comprises integrating the gasket with a cover body or a frame body through two-color molding method.

9. A process for producing the gasket as set forth in Claim 6 which comprises integrating the gasket with a cover body or a frame body through inserting molding method.

10. A gasket material constituting a gasket which is fitted to a cover body or a frame body, and which is integrated with said cover body or said frame body, characterized by carrying out a treatment of removing gases contained in said gasket material prior to the shaping of said gasket material into a prescribed shape.

11. The gasket material according to Claim 10, wherein said treatment of removing gases is a heat treatment.

12. The gasket material according to Claim 10, wherein said treatment of removing gases is a vacuum drying treatment.

13. The gasket material according to Claim 10, wherein said treatment of removing gases is simultaneous heat treatment and vacuum drying treatment.

14. The gasket material according to Claim 10, wherein the gas removal rate is at least 50% .

15. A process for producing the gasket material as set forth in Claim 10 which comprises removing gases contained in the gasket material by a heat treatment.

16. A process for producing the gasket material as set forth in Claim 10 which comprises removing gases contained in the gasket material by a vacuum drying treatment.

17. A process for producing the gasket material as set forth in Claim 10 which comprises removing gases contained in the gasket material by simultaneous heat treatment and vacuum drying treatment.

18. A gasket which comprises the gasket material as set forth in Claim 10, and which is integrated with a cover body or a frame body.

19. The gasket according to Claim 18, wherein the cover body or the frame body comprises a thermoplastic resin, the gasket comprises a thermoplastic elastomer, and the integration of said thermoplastic resin and said thermoplastic elastomer is made by fused adhesion therebetween.

20. The gasket according to Claim 18, wherein the gasket is shaped onto the cover body or the frame body through injection molding method.

21. A process for producing the gasket as set forth in Claim 19 which comprises integrating the gasket with a cover body or a frame body through two-color molding method.

22. A process for producing the gasket as set forth in Claim 19 which comprises integrating the gasket with a cover body or a frame body through inserting molding method.
